# EUROPÄISCHE PATENTSCHRIFT

(11) **EP 0 644 680 B1**
(45) Veröffentlichungstag und Bekanntmachung des Hinweises auf die Patenterteilung: **07.12.2005**
(21) Anmeldenummer: 94113016.3
(22) Anmeldetag: 20.08.1994
(51) Int. Cl.: H04M 3/42, H04M 11/10, H04M 3/533

(54) **Verfahren und Vorrichtung zum Erstellen und Bearbeiten von Textdokumenten**
Method and device for establishing and processing text documents
Méthode et dispositif pour établir et traiter des documents de texte

(30) Priorität: 17.09.1993 DE 4331710
(43) Veröffentlichungstag der Anmeldung: 22.03.1995
(73) Patentinhaber: ALCATEL, 75008 Paris (FR)
(72) Erfinder: Huzenlaub, Richard, D-75339 Höfen (DE); Kopp, Dieter, D-71282 Hemmingen (DE)
(74) Vertreter: Knecht, Ulrich Karl

(56) Entgegenhaltungen:
- EP-A- 0 565 850
- WO-A-90/01843
- US-A- 4 996 707

## Beschreibung

Die Erfindung betrifft ein Verfahren und eine Vorrichtung zum Diktieren, Senden, Empfangen und Kommentieren eines Textdokuments mittels einer Telekommunikationseinrichtung.

Bisher bekannt ist aus der deutschen Patentanmeldung DE 39 10 467 A1 ein "Verfahren und Vorrichtung zur Erzeugung von Berichten". Hierin wird beschrieben, daß Sprachsignale einschließlich vorgegebener Triggerausdrücke, von z.B. einem Mehrfachleitung-Telefon, an ein Spracherkennungssystem übertragen werden. Das Spracherkennungssystem ordnet die Triggerausdrücke vorgegebenen Blöcken von Textmitteilungen zu und erzeugt einen Bericht. Der Text wird dann an eine Sprachsynthese-Vorrichtung zur Erzeugung synthetischer Sprachsignale abgegeben, die an ein Sprachspeicher- und Weiterleitungssystem zur späteren Wiedergewinnung ausgegeben werden. Des weiteren wird von dem System eine gedruckte Kopie des Textes des Berichts geliefert.

In WO 90/01843 ist ein Kommunikationssystem offenbart, welches einem Benutzer das Diktieren einer Nachricht über eine Teilnehmerstation an eine entfernte Operatorstation ermöglicht, wobei die Nachricht durch einen Operator mittels Tastatur der Operatorstation eingegeben wird und der Text beim Schreiben der Nachricht an der Teilnehmerstation angezeigt wird. Der Text wird somit auf einem Monitor des Operators und auf dem Monitor der Teilnehmerstation angezeigt. Dabei wird nicht der gesamte Text als Block an die Teilnehmerstation, sondern die Betätigung der Tasten der Tastatur durch den Operator einzeln übertragen, so dass der Teilnehmer das Schreiben des Textes durch den Operator an der Teilnehmerstation verfolgen kann. Die D1 offenbart insbesondere ein Kerbfilter, mit dem eine simultane Übertragung von Sprach- und Textdaten über dieselbe Telefonleitung ermöglicht wird.

Des weiteren ist aus der deutschen Patentanmeldung P 41 01 200.3 mit dem Titel "Kommunikationssystem" ein solches bekannt, welches in einem Sende- und Empfangsgerät diktierte Sprache in synthetische Sprache umsetzt und/oder in Texte umsetzt. Die Sprache und/oder die Texte werden dann an den Empfänger von einer Zentrale weitergeliefert. Hierbei sind zum Weiterliefern insbesondere ISDN/Telefax, ISDN/Telex und Briefpost erläutert.

Es ist Aufgabe der Erfindung ein Verfahren und eine Vorrichtung zu schaffen, mittels dem bzw. der ein Textdokument über eine Telekommunikationseinrichtung diktiert und gesendet bzw. empfangen und kommentiert werden kann.

Die Aufgabe wird gelöst durch die Lehre des ersten, fünften und neunten Patentanspruches.

Ein Vorteil der Erfindung ist, dass eine kostengünstige Vorrichtung bzw. ein Verfahren bereitgestellt wird mit der bzw. dem ein Textdokument versendet werden kann. Das Textdokument kann mit der kostengünstigen Vorrichtung bzw. dem Verfahren korrigiert und/oder editiert, aber auch von einem weiteren Teilnehmer kommentiert werden.

Vorteilhaft ist weiterhin, dass sich die zuvor genannten Funktionen nicht allein auf ein Textdokument beschränken, sondern auch auf ein Multimediadokument anwendbar sind.

Die erfindungsgemäße Vorrichtung bzw. das erfindungsgemäße Verfahren erlaubt es einem Teilnehmer in vorteilhafter Weise ein Textdokument, z.B. ein Faksimile für einen weiteren Teilnehmer zu diktieren, welches dann, ohne den Zwischenweg über ein Sekretariat zu nehmen, automatisch versendet wird. Somit ist ein Teilnehmer in der Lage, unabhängig von einer Schreibmaschine oder einem Textverarbeitungsprogramm auf einem PC ein Textdokument, z.B. ein Faksimile zu diktieren und zu versenden.

Vorteilhafte Ausgestaltungen der Erfindung sind den Unteransprüchen 2 bis 4, 6 bis 8 und 10 bis 13 zu entnehmen.

Die Unteransprüche 2 bis 4 erläutern, dass ein persönliches Adressenverzeichnis und/oder ein persönliches Verteilerverzeichnis durch Einsprechen eines Kurzwortes zur Verfügung gestellt wird, so dass ein Versenden an einen Teilnehmer oder Verteiler in einfacher Weise durchgeführt werden kann.

Ebenfalls kann ein bereits diktierter Text dem Teilnehmer wieder vorgelesen werden, d.h. mittels einer Software mit einer Text-to-speech Funktion als Sprache ausgegeben werden. Dies kann zu jedem Zeitpunkt, insbesondere nach Abschluss des Diktats erfolgen, worauf eventuelle Verbesserungen oder Korrekturen vorgenommen werden können.

Des weiteren steht einem Teilnehmer ein persönliches Vokabular zur Verfügung, wodurch sich unter anderem die Spracherkennungsrate erhöht.

Gemäß Anspruch 5 ist das Kommentieren erhaltener Textdokumente in einfacher Weise möglich.

Nach Anspruch 6 kann der Kommentar oder das Textdokument samt Kommentar an zumindest einen weiteren Teilnehmer gesendet werden.

Nach Unteranspruch 7 und 8 wird erläutert, dass ein Kommentieren von Multimediadokumenten und/oder Editieren in Multimediadokumenten ebenso in einfacher Weise ermöglicht wird.

Nach den Unteransprüchen 10 bis 13 wird erläutert, dass die weiteren Ausgestaltungen der Vorrichtung Mittel vorsehen, mit denen ein Textdokument wiederum in Sprache umgewandelt werden kann, wodurch in vorteilhafter Weise ein Text jederzeit wieder vorgelesen werden kann.

Ebenfalls sind Mittel zur Teilnehmeridentifizierung vorgesehen, um z.B. vor einem Zugriff eines unberechtigten Teilnehmers Schutz zu bieten, und um ein persönliches Adressen- und Verteilerverzeichnis zur Verfügung zu stellen, welches eine vereinfachte Möglichkeit zum Versenden der Textdokumente oder der Multimediadokumente bietet.

Im folgenden wird die Erfindung anhand der Figuren näher erläutert. Folgende Figuren zeigen:
- Fig. 1:: Ablaufdiagramm des erfindungsgemäßen Verfahrens nach Anspruch 1,
- Fig. 2:: Blockschaltbild der erfindungsgemäßen Vorrichtung,
- Fig. 3:: Ablaufdiagramm einer vorteilhaften Ausgestaltung des Verfahrens,
- Fig, 4:: Ablaufdiagramm des erfindungsgemäßen Verfahrens nach Anspruch 6.

Im folgenden werden Ausführungsbeispiele näher erläutert:

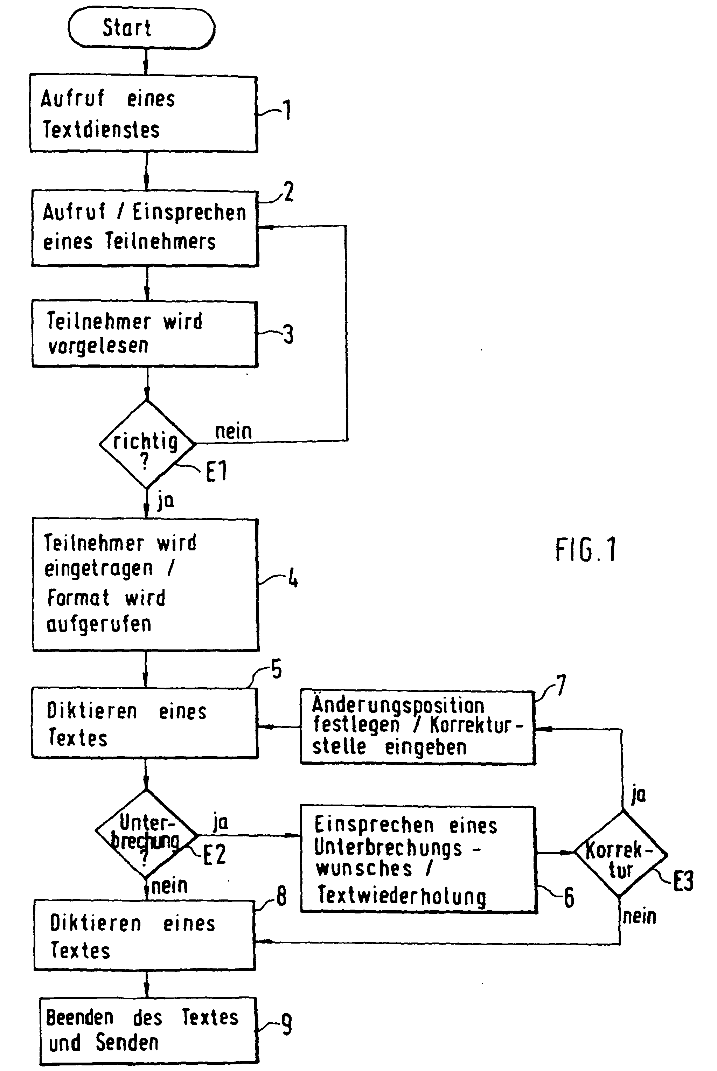

Im folgenden wird das Verfahren nach Anspruch 1 anhand von Figur 1 erläutert.

Ein Teilnehmer möchte einem weiteren Teilnehmer z.B. ein Faksimile senden. Um in die Lage versetzt zu werden, von einem beliebigen Ort aus, an dem sich z.B. lediglich ein Telefon befindet, einen Text in Form von Sprache zu diktieren und zu senden, wird folgendes Verfahren vorgesehen.

In einem ersten Schritt 1 wird ein Aufruf eines Textdienstes vorgesehen. Hierzu wird, wie später noch eingehend erläutert wird, ein Spracherkenner aktiviert.

In einem zweiten Schritt 2 erfolgt der Aufruf eines Teilnehmers oder das Einsprechen eines Teilnehmers. Hierbei kann entweder der Teilnehmer und die dazugehörende Anschrift mittels Sprache vollständig eingegeben werden, oder aber die Adresse des Teilnehmers ist in einem Adressenverzeichnis gespeichert, so daß die vollständige Adresse durch Einsprechen lediglich des Namens aktiviert und eingetragen werden kann. Des weiteren ist es möglich z.B. einen Verteiler zu bestimmen, indem ein Kurzwort als Stichwort eingesprochen wird. Der Verteiler ist in einem Verteilerverzeichnis enthalten und gibt an, an wen und wohin das Textdokument versendet werden soll. Ein Verteiler legt so eine Vielzahl von Teilnehmern fest, denen ein und dasselbe Textdokument, z.B. ein Faksimile, gesendet werden soll.

In einem dritten Schritt 3 erfolgt mittels einer Software, einer sogenannten Text-to-Speech-Funktion, eine Umsetzung der Textdaten in Sprache. Mittels dieser Funktion wird der Teilnehmer oder der Verteiler wieder aufgesprochen, also vorgelesen, um eine Richtigkeit der eingetragenen Adresse oder des Verteilers zu gewährleisten. Dies kann z.B. zusätzlich durch eine verbale Bestätigung der wieder aufgesprochenen Adresse oder des Verteilers erhöht werden.

Eine Bestätigung und das Aufsprechen der Adresse oder des Verteilers sind nicht zwingend notwendig und können ebenso vor dem Senden wieder aufgesprochen werden, wobei dann der Befehl zum Senden als indirekte Bestätigung gilt.

Die in einem ersten Entscheidungsschritt E1 getroffene Entscheidung, daß der Teilnehmer nicht korrekt ist, führt dazu, daß ein neuer Aufruf oder ein erneutes Einsprechen des Teilnehmers vorgenommen werden muß. Wurde die Entscheidung gefällt, daß der Teilnehmer korrekt ist, dann wird der Teilnehmer in einem vierten Schritt 4 eingetragen. In dem vierten Schritt 4 wird ebenfalls ein Format aufgerufen. Das Format legt z.B. fest, daß ein Format für ein Faksimile eingerichtet und vervollständigt werden muß.

In einem fünften Schritt 5 wird ein Text in Form von Sprache diktiert. Zu jedem Zeitpunkt des Diktats besteht die Möglichkeit einer Unterbrechung, wie der zweite Entscheidungsschritt E2 angibt. Darauf besteht, für den Fall, daß ein Unterbrechungswunsch vorliegt, die Möglichkeit, in einem weiteren Schritt 6 dieses verbal zu äußern und eine Textwiederholung zu veranlassen. Hierbei existieren die Möglichkeiten, ein Wort, einen Satz, einen Absatz oder den gesamten Text zu wiederholen.

Wird eine Korrektur gewünscht E3, wird in einem nächsten Schritt 7 die Änderungsposition festgelegt, und die gewünschte Korrektur wird eindiktiert. Darauf wird mit dem Diktat des fortlaufenden Textes 5 fortgefahren. Wird keine Korrektur gewünscht E3 oder gab es keinen Unterbrechungswunsch, wird mit dem Diktieren eines Textes in einem kommenden Schritt 8 fortgefahren.

In einem letzten Schritt 9 wird der Text beendet, eventuell noch einmal vorgelesen und bei Einverständnis gesendet.

In der Form eines Ablaufprotokolles läßt sich der zuvor beschriebene Ablauf anhand eines Beispiels wie folgt darstellen:

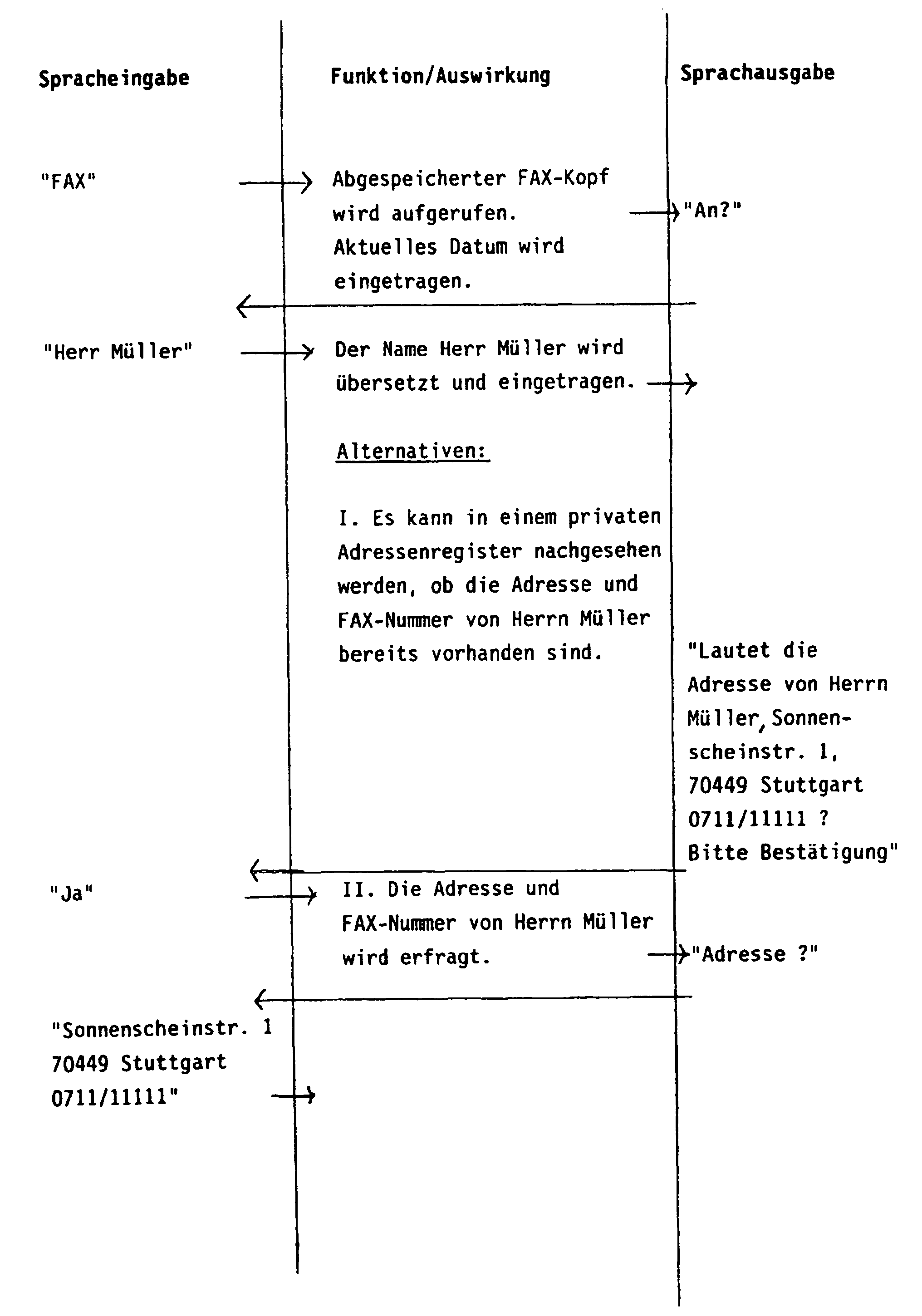

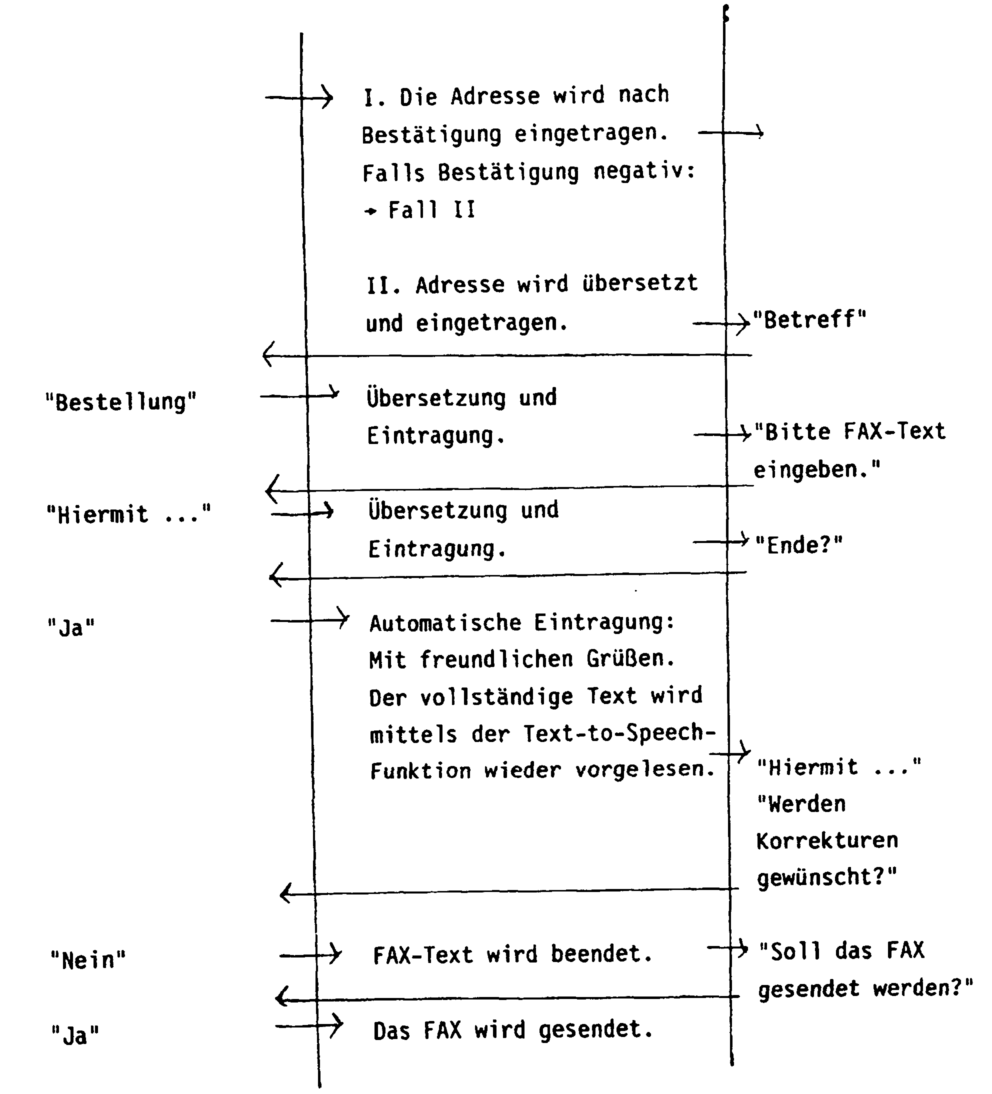

Für das zuvor beschriebene Ablaufprotokoll existieren mehrere verschiedene Variationsmöglichkeiten.

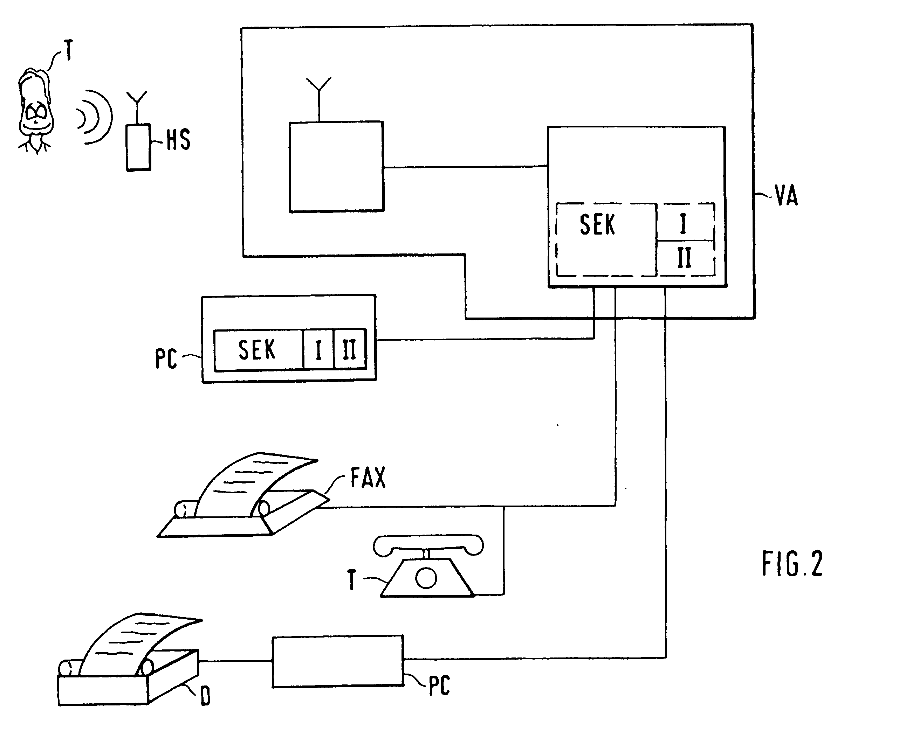

Im folgenden wird die Vorrichtung anhand von Figur 2 erläutert:

Eine Vorrichtung zum Diktieren und Senden eines Textdokuments mittels einer Telekommunikationseinrichtung besteht aus einer Vorrichtung zum Einsprechen HS, über die ein Teilnehmer T einen Text mittels Sprache diktiert. Die Vorrichtung zum Einsprechen HS kann beispielsweise ein schnurloses Telefon, ein Mobiltelefon usw. sein.

Um einen Text mittels Sprache zu diktieren, also einen Textdienst vorzusetzen, wird ein Spracherkenner SEK zum Umwandeln gesprochener Sprache in Text vorgesehen. Der Spracherkenner SEK kann sich beispielsweise in einer Vermittlungsanlage VA befinden und wird dort durch Aussenden einer Teilnehmeridentifikation aktiviert.

Alternativ dazu kann über eine Vermittlungsanlage VA eine Verbindung zu einem persönlichen, privaten Datenverarbeitungsgerät PC aufgebaut werden, in dem sich der Spracherkenner SEK befindet. Wie zuvor erläutert, werden die einzelnen Verfahrensschritte durchgeführt.

Zusätzlich zu dem Spracherkenner SEK befindet sich Software zum Korrigieren I von Textdaten in dem Spracherkenner. Die Korrekturen können hierfür mittels Sprache eingegeben werden.

Software zum Editieren II in Textdaten befindet sich ebenfalls in dem Spracherkenner SEK.

Ebenfalls zu der erfindungsgemäßen Vorrichtung zählt eine Einrichtung zum Senden der Textdaten zu einem weiteren Teilnehmer. Dies kann beispielsweise ebenfalls über die Vermittlungsanlage VA vorgenommen werden.

Des weiteren besitzt die Vorrichtung eine Einrichtung FAX zum Drucken des empfangenen Dokuments und/oder Mittel T zum Aufsprechen von Sprache.

Wird beispielsweise ein Textdokument gesendet, und der weitere Teilnehmer hat kein Faksimile angeschlossen, dann kann, falls ebenfalls ein Zugriff auf den Spracherkenner SEK existiert, aus den Textdaten mittels der Text-to-Speech-Funktion wieder Sprache geformt werden, die dann über das Telefon ausgegeben wird.

Ebenso besteht die Vorrichtung aus einem Personal-Computer PC mit daran angeschlossenem Drucker D. Auf dem Personal-Computer PC kann das Dokument angesehen werden, wahlweise ausgedruckt werden und kommentiert werden.

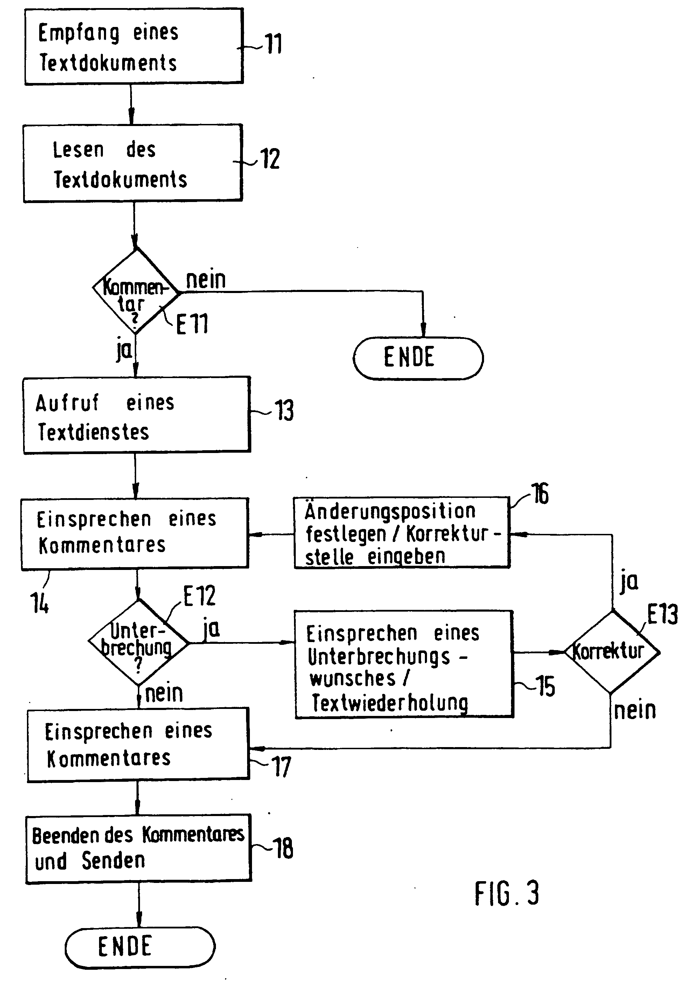

Im folgenden wird ein Ausführungsbeispiel für das Empfangen und Kommentieren eines Textdokuments anhand von Figur 3 näher erläutert.

In einem ersten Schritt 11 wird ein Textdokument empfangen. Dieses kann beispielsweise als Faksimile eintreffen oder als sogenannte email auf einem Personalcomputer vorliegen.

In einem weiteren Schritt 12 wird das Textdokument gelesen. In einem Entscheidungsschritt E11 wird festgelegt, ob ein Kommentar hinzugefügt werden soll oder nicht. Wird kein Kommentar hinzugefügt, ist das Verfahren zu Ende ENDE. Wird ein Kommentar hinzugefügt, wird in einem weiteren Schritt 13 der Textdienst aufgerufen. In einem folgenden Schritt 14 wird ein Kommentar eingesprochen.

Um auch hierbei die Möglichkeit für eine Unterbrechung oder eine Verbesserung zu bieten, wird in einem Entscheidungsschritt E12, für den Fall, daß eine Unterbrechung gewünscht wird, in einem nächsten Schritt 15 ein Unterbrechungswunsch verbal geäußert und eine Textwiederholung erfolgt mittels der bereits erläuterten Methoden.

Wird eine Korrektur gewünscht E13, wird in einem Schritt 16 eine Änderungsposition festgelegt und die Korrekturstelle wird eingegeben. Darauf folgt wiederum der Schritt 14.

Ist keine Korrektur erwünscht E13, wird mit dem folgenden Schritt 17, dem weiteren Einsprechen des Kommentares, fortgefahren.

In dem letzten Schritt 18 wird der Kommentar beendet und er wird gesendet. Hierbei kann z.B. der gesamte Text plus Kommentar oder lediglich der Kommentar an einen oder mehrere Teilnehmer gesendet werden.

Bei den zuvor beschriebenen Verfahren, in denen ein Textdienst aufgerufen wird, wird, um den Zugang zu dem Textdienst zu gewähren, eine Teilnehmeridentifizierung vorgenommen. Dies kann beispielsweise durch Einsprechen eines Codeworts erfolgen oder auch durch jedes andere bekannte Verfahren.

Nach der Teilnehmeridentifizierung kann dem Teilnehmer z.B. ein persönliches Vokabular zur Verfügung gestellt werden. Des weiteren kann einem identifizierten Textdienstteilnehmer ein persönliches Adressenverzeichnis und/oder ein Verteilerverzeichnis zugeodnet werden.

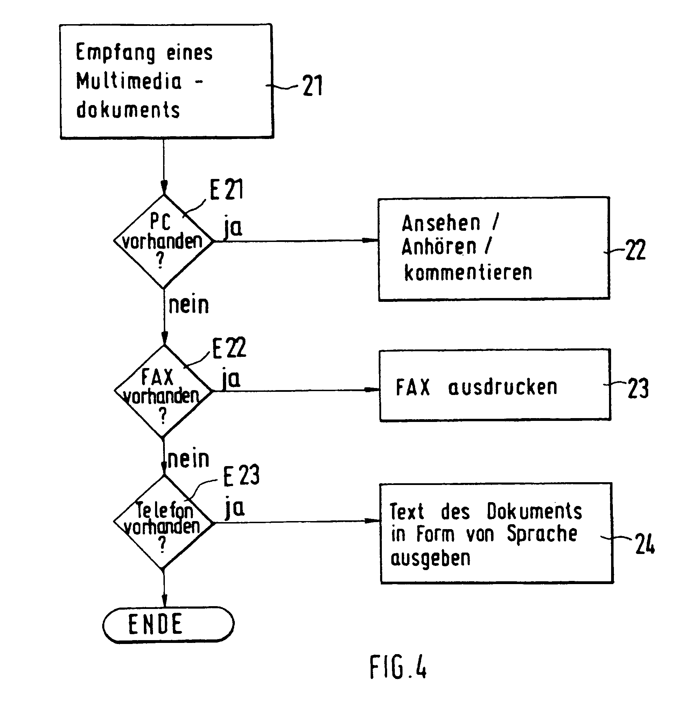

Im folgenden wird das Verfahren nach Anspruch 6 anhand der Figur 4 erläutert.

Ein Verfahren zum Empfangen und Kommentieren eines Multimediakoduments mittels einer Telekommunikationseinrichtung besteht aus einem ersten Schritt 21, dem Empfang eines Multimediadokuments.

Für den Fall, daß z.B. ein Personal-Computer PC vorhanden ist E21, kann das Multimediadokument angesehen, gelesen, angehört und sowohl verbal als auch mittels Texteingabe kommentiert werden 22.

Für den Fall, daß kein PC vorhanden ist, aber ein Faksimile FAX vorhanden ist E22, werden die Textdaten als FAX ausgedruckt 23.

Für den Fall, daß kein Faksimile vorhanden ist, aber ein Telefon vorhanden ist E23, wird der gesprochene Text des Multimediadokuments aufgesprochen und ausgegeben 24. Ebenso können die Textdaten mittels der zuvor erläuterten Text-to-Speech-Funktion in Sprache umgewandelt werden und aufgesprochen werden.

Ebenso wie bei den Textdokumenten ist es auch bei den Multimediadokumenten möglich, in dem Dokument zu editieren und es zu einem Teilnehmer zu senden.

## Patentansprüche

1. Verfahren zum Diktieren und Senden eines Textdokumentes mittels einer Telekommunikationseinrichtung, bei dem ein Text in Form von Sprache diktiert und bei dem der Text als Textdaten zu Teilnehmern über ein Telekommunikationsnetzwerk gesendet wird, **dadurch gekennzeichnet, dass**
ein Textdienst aufgerufen wird; bei dem die Sprache mittels eines Spracherkenners in Textdaten umgewandelt wird; und dass bei einem Verfahren zum Korrigieren der Textdaten mittels Sprache eine Software zum Korrigieren (I) verwendet wird und /oder zum Editieren in den Textdaten eine Software zum Editieren (II) verwendet wird.

2. Verfahren nach Anspruch 1, bei dem der bereits diktierte Text mittels einer Software mit einer Text-to-Speech Funktion als Sprache ausgegeben wird.

3. Verfahren nach Anspruch 1 oder 2,
bei dem ein Teilnehmer in einem Adressenverzeichnis in dem Spracherkenner abgespeichert ist, und /oder bei dem ein Verteiler in einem Verteilerverzeichnis in dem Spracherkenner abgespeichert ist, und/oder der Teilnehmer oder der Verteiler durch Einsprechen eines Kurzwortes automatisch in das Textdokument eingetragen wird, und das Textdokument automatisch an den Teilnehmer oder den Verteiler versendet wird.

4. Verfahren nach einem der Ansprüche 1 bis 3,
bei dem mittels einer Teilnehmeridentifizierung ein persönliches Vokabular zur Verfügung gestellt wird, und/oder bei dem ein persönliches Adressenverzeichnis und/oder ein persönliches Verteilerverzeichnis zur Verfügung gestellt wird.

5. Verfahren zum Empfangen und Kommentieren eines Textdokumentes, insbesondere eines nach einem der Ansprüche 1 bis 4 erstellten Textdokuments,
**dadurch gekennzeichnet, dass** das Textdokument empfangenund visuell dargestellt wird,
ein Textdienst aufgerufen und ein Kommentar in Form von Sprache diktiert wird und
die Sprache mittels eines Spracherkenners in Textdaten umgewandelt wird.

6. Verfahren nach Anspruch 5, wobei nur der Kommentar oder das Textdokument samt Kommentar an zumindest einen weiteren Teilnehmer gesendet wird.

7. Verfahren nach Anspruch 5 oder 6, bei dem das Textdokument als ein Textdaten enthaltendes Multimediadokument ausgeführt ist, wobei vor der Kommentierung des Dokumentes
- Textdaten des Multimediadokumentes visuell dargestellt werden, und/oder
- Textdaten des Multimediadokumentes ausgedruckt werden, und/oder
- Textdaten in Sprache umgewandelt werden.

8. Verfahren nach Anspruch 7,
bei dem die Textdaten und/oder die Sprache des Multimediadokumentes editiert werden.

9. Vorrichtung zum Diktieren und Senden eines Textdokumentes mittels einer Telekommunikationseinrichtung, enthaltend
- eine Einrichtung zum Diktieren (HS),
- eine Einrichtung zum Übermitteln von gesprochener Sprache zu einem Spracherkenner, **gekennzeichnet durch**,
- einen Spracherkenner (SEK) zum Umwandeln von Sprache in Textdaten,
- Software zum Korrigieren (I) von Textdaten mittels Sprache,
- Software zum Editieren (II) in Textdaten, und
- eine Einrichtung zum Senden des Textdokumentes zu Teilnehmern über ein Kommunikationsnetzwerk.

10. Vorrichtung nach Anspruch 9,
enthaltend eine Software mit einer Text-to-Speech Funktion zur Sprachausgabe eines bereits diktierten Textes.

11. Vorrichtung nach Anspruch 9 oder 10,
mit einer Einrichtung zum Drucken (FAX, D) eines empfangenen Textdokuments und/oder mit Mitteln (T) zum wiedergeben von in Sprache umgewandelten Textdaten.

12. Vorrichtung nach einem der Ansprüche 9 bis 11,
bei der Mittel zur Teilnehmeridentifizierung zur Benutzung des Spracherkenners (SEK) vorhanden sind, und bei der mittels einer Software ein persönliches Adressenverzeichnis und/oder ein persönliches Verteilerverzeichnis aus einem Speicher aktivierbar ist.

13. Vorrichtung nach einem der Ansprüche 9 bis 12,
mit Mitteln zum Empfangen und Senden von Multimediadokumenten.

## Claims

1. Method of dictating and sending a text document by means of a telecommunications appliance in which a text is dictated in the form of speech and in which the text is sent as text data to subscribers via a telecommunications network, **characterized in that** a text service is called up in which the speech is converted into text data by means of a voice-recognition device and **in that** software for correcting (I) is used in a method for correcting the text data by means of speech and/or software for editing (II) is used for editing the text data.

2. Method according to Claim 1, in which the already dictated text is outputted as speech by means of software having a text-to-speech function.

3. Method according to Claim 1 or 2, in which a subscriber is stored in an address list in the voice-recognition device and/or in which a distributor is stored in a distribution list in the voice-recognition device and/or the subscriber or the distributor is automatically entered in the text document by dictating a contracted word and the text document is automatically dispatched to the subscriber or the distributor.

4. Method according to any one of Claims 1 to 3, in which a personal vocabulary is made available by means of a subscriber identification and/or in which a personal address list and/or a personal distribution list is made available.

5. Method of receiving and annotating a text document, in particular a text document created according to any one of Claims 1 to 4, **characterized in that** the text document is received and visually displayed, a text service is called up and an annotation is dictated in the form of speech, and the speech is converted into text data by means of a voice-recognition device.

6. Method according to Claim 5, wherein only the annotation or the text document together with an annotation is sent to at least one further subscriber.

7. Method according to Claim 5 or 6, in which the text document is executed as a multimedia document containing text data, wherein, prior to the annotation of the document,
- text data of the multimedia document are visually displayed, and/or
- text data of the multimedia document are printed out, and/or
- text data are converted into speech.

8. Method according to Claim 7, in which the text data and/or the speech of the multimedia document are/is edited.

9. Device for dictating and sending a text document by means of a telecommunications appliance, comprising
- a dictation appliance (HS),
- a device for transmitting spoken speech to a voice-recognition device, **characterized by**
- a voice-recognition device (SEK) for converting speech into text data,
- software for correcting (I) text data by means of speech,
- software for editing (II) text data, and
- an appliance for sending the text document to subscribers via a communications network.

10. Device according to Claim 9, comprising software having a text-to-speech function for voice output of an already dictated text.

11. Device according to Claim 9 or 10, having an appliance for printing (FAX, D) a received text document and/or having means (T) for reproducing text data converted into speech.

12. Device according to any one of Claims 9 to 11, in which the means for subscriber identification for the use of the voice-recognition device (SEK) are available and in which a personal address list and/or a personal distribution list can be activated from a memory by means of software.

13. Device according to any one of Claims 9 to 12, having means for receiving and sending multimedia documents.

## Revendications

1. Procédé pour dicter et envoyer un document de texte au moyen d'un appareil de télécommunication, dans lequel un texte est dicté sous la forme de parole et dans lequel le texte est envoyé sous la forme de données de texte à des abonnés au moyen d'un réseau de télécommunication, **caractérisé en ce qu'**un service de texte est appelé, dans lequel la parole est convertie en données de texte au moyen d'un système de reconnaissance vocale et **en ce que**, avec un procédé pour la correction des données de texte au niveau de la parole, on envoie un logiciel pour la correction (I) et/ou on utilise un logiciel d'édition (II) pour l'édition dans les données de texte.

2. Procédé selon la revendication 1, dans lequel le texte déjà dicté est édité au moyen d'un logiciel comprenant une fonction Text-to-Speech sous la forme de parole.

3. Procédé selon la revendication 1 ou 2,
dans lequel un abonné est mémorisé dans un répertoire d'adresses dans le système de reconnaissance vocale, et/ou dans lequel un destinataire est mémorisé dans un répertoire de destinataires dans le système de reconnaissance vocale, et/ou l'abonné ou le destinataire est inscrit automatiquement dans le document de texte par l'entrée d'un mot abrégé, et le document de texte est envoyé automatiquement à l'abonné ou au destinataire.

4. Procédé selon l'une quelconque des revendications 1 à 3, dans lequel un ordinateur personnel est mis à disposition au moyen d'une identification d'abonné, et/ou dans lequel un répertoire d'adresses personnel et/ou un répertoire de destinataires personnel est mis à disposition.

5. Procédé pour recevoir et commenter un document de texte, en particulier d'un document de texte établi selon l'une quelconque des revendications 1 à 4, **caractérisé en ce que** le document de texte est reçu et présenté visuellement, un service de texte est appelé et un commentaire est dicté sous la forme de parole et la parole est convertie en données de texte au moyen d'un système de reconnaissance vocale.

6. Procédé selon la revendication 5, seul le commentaire ou le document de texte avec commentaire étant envoyé à au moins un autre abonné.

7. Procédé selon la revendication 5 ou 6, dans lequel le document de texte est mentionné comme document multimédia contenant des données de texte, des données de texte du document multimédia étant présentées visuellement, et/ou des données de texte du document multimédia étant imprimées, et/ou des données de texte étant converties en paroles avant le commentaire du document.

8. Procédé selon la revendication 7, dans lequel les données de texte et/ou la parole du document multimédia sont éditées.

9. Dispositif pour dicter et envoyer un document de texte au moyen d'un appareil de télécommunication, comprenant
- un appareil pour dicter (HS),
- un appareil pour transmettre de la parole parlée à un système de reconnaissance vocale, **caractérisé par**
- un système de reconnaissance vocale (SEK) pour la conversion de parole en données de texte,
- un logiciel pour corriger (I) des données de texte par la parole,
- un logiciel pour éditer (II) en données de texte, et
- un appareil pour envoyer le document de texte à des abonnés au moyen d'un réseau de communication.

10. Dispositif selon la revendication 9, contenant un logiciel avec une fonction de Text-to-speech pour la sortie vocale d'un texte déjà dicté.

11. Dispositif selon la revendication 9 ou 10, comprenant un appareil pour imprimer (FAX, D) un document de texte reçu et/ou des moyens (T) pour restituer des données de texte converties en paroles.

12. Dispositif selon l'une quelconque des revendications 9 à 11, dans lesquelles des moyens pour l'identification d'abonné sont présents pour l'utilisation du système de reconnaissance vocale (SEK), et dans lequel un répertoire d'adresses personnel et/ou un répertoire de destinataires personnel peut être activé à partir d'une mémoire au moyen d'un logiciel.

13. Dispositif selon l'une quelconque des revendications 9 à 12, comprenant des moyens pour envoyer et recevoir des documents multimédia.
